Europäisches Patentamt

European Patent Office

Office européen des brevets

(11) Publication number: **0 444 699 A2**

## EUROPEAN PATENT APPLICATION

(21) Application number: 91103104.5

(51) Int. Cl.5: **H04N 9/81**

(22) Date of filing: 01.03.91

(30) Priority: 02.03.90 JP 51248/90
07.09.90 JP 238095/90

(43) Date of publication of application:
**04.09.91 Bulletin 91/36**

(84) Designated Contracting States:
**AT DE FR GB NL**

(71) Applicant: SONY CORPORATION
7-35, Kitashinagawa 6-chome Shinagawa-ku
Tokyo(JP)

(72) Inventor: **Nishimura, Hajime**
c/o **SONY CORPORATION, 7-35,**
**Kitashinagawa 6-chome**
**Shinagawa-ku, Tokyo(JP)**
Inventor: **Nishikata, Yutaka**
c/o **SONY CORPORATION, 7-35,**
Kitashinagawa 6-chome
Shinagawa-ku, Tokyo(JP)
Inventor: **Tauchi, Yoichiro**
c/o **SONY CORPORATION, 7-35,**
Kitashinagawa 6-chome
Shinagawa-ku, Tokyo(JP)
Inventor: **Yamashita, Keitaro**
c/o **SONY CORPORATION, 7-35,**
Kitashinagawa 6-chome
Shinagawa-ku, Tokyo(JP)

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) **Video signal recording apparatus.**

(57) A video signal recording apparatus having luminance and chrominance signals multiplexed on a time division basis. In signal recording, a two-channel head arrangement (10A, 11, 17A; 10B, 11,17B) with a gap between different azimuths performs two scans on one field of recording signals for two tracks concurrently. Because the same kind of chrominance signal is subject to each of the different azimuths, not only normal speed reproduction but also variable speed reproduction is performed with high picture quality.

EP 0 444 699 A2

# FIG. I

## BACKGROUND OF THE INVENTION:

### Field of the Invention:

The present invention relates to a video signal recording apparatus capable of recording high-definition television (HDTV) signals.

### Description of the Prior Art:

Some prior art video tape recorders, such as the one disclosed in Japanese Patent Laid-open No. 63-194494, record and reproduce high-definition television (HDTV) signals for household use. In operation, the chrominance signal components of the received signal are linearly sequenced and contracted on the time base so as to be multiplexed with the luminance signal components thereof on a time division basis. The resulting so-called TCI signal is handled by a multiple channel head arrangement for division into a plurality of channels for recording and reproduction.

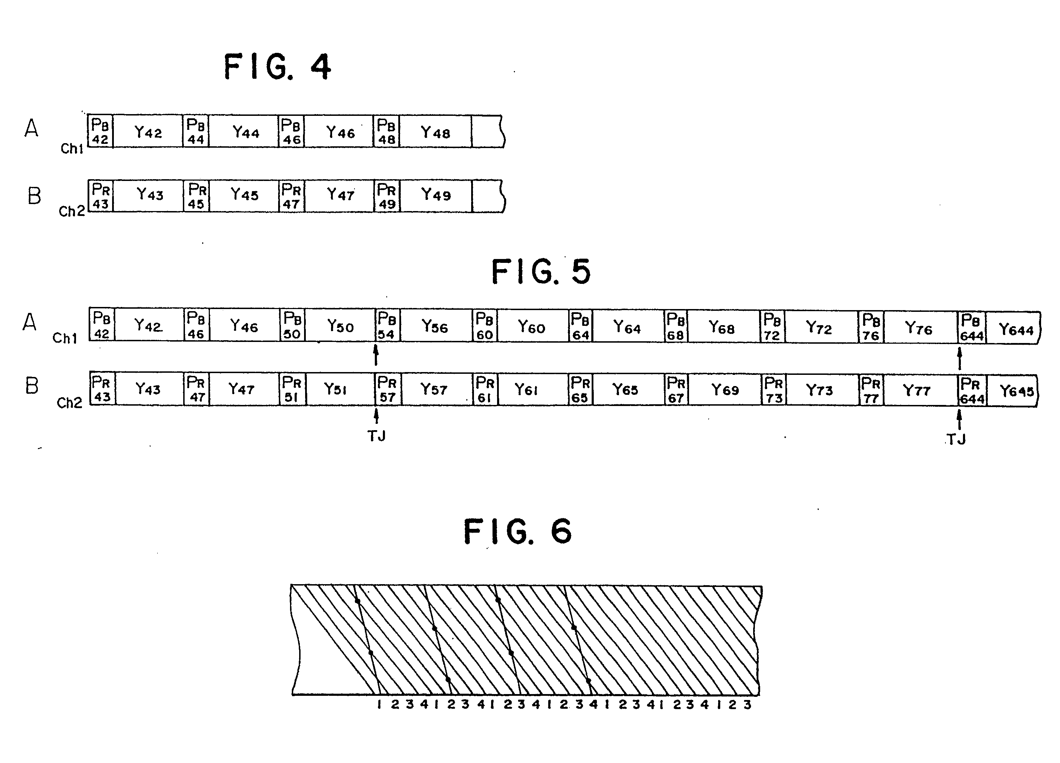

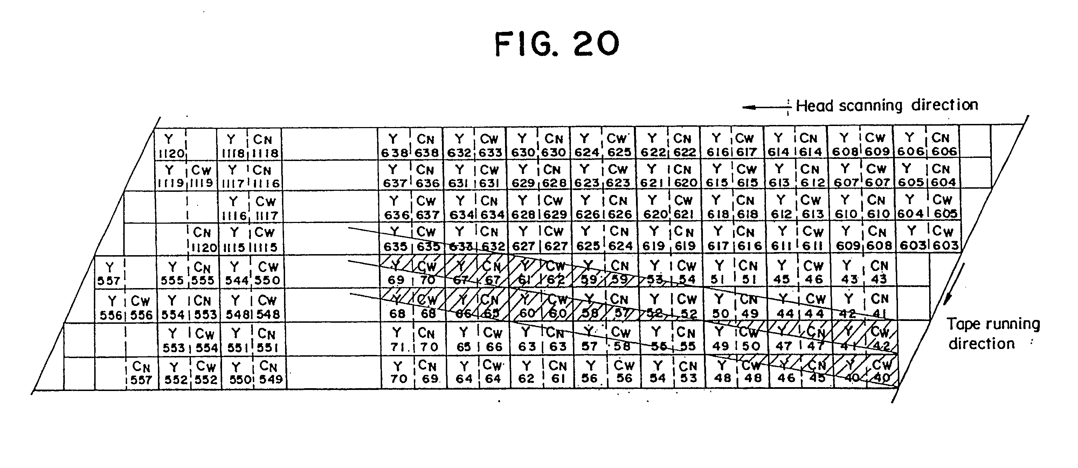

The apparatus described in the above-mentioned literature has a recording pattern of Fig. 20. This pattern regarding the luminance and chrominance signals applies where one field is scanned twice using a two-channel head for recording or reproduction (on 4 channels). In Fig. 20, character Y represents a luminance signal, and $C_N$ and $C_W$ designate a chrominance signal each. The number attached to each character is the number representing the horizontal interval to which each signal belongs. (Fig. 20 corresponds to Fig. 6 accompanying the above literature.)

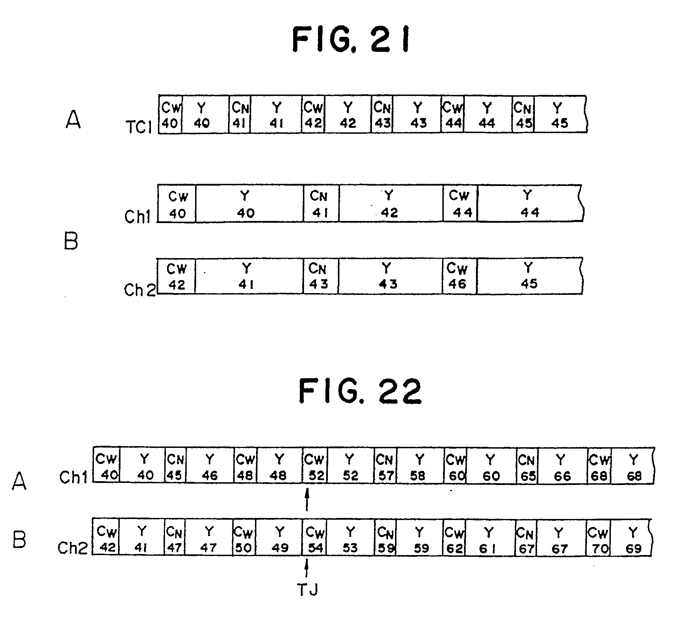

In the example above, the TCI signal formed as shown in Fig. 21 has the chrominance signal $C_N$ in the $(4n+1)$th horizontal internal exchanged with the chrominance signal $C_W$ in the $(4n+2)$th horizontal interval. At the same time, the TCI signal is doubled in length on the time base and is divided into a first and a second channel. The first channel deals with even-numbered horizontal interval signals, and the second signal with odd-numbered horizontal interval signals. Illustratively, the signals of the 40th and 41st horizontal intervals at the beginning of an effective screen are recorded by a first scan (in the first segment), followed by those of the 42nd, 43rd, 44th and 45th horizontal intervals by a second scan (in the second segment). Then the signals of the 46th to the 49th horizontal intervals are recorded in the first segment. Thereafter, the signals of every four horizontal intervals are alternately distributed to and recorded in the first and the second segment.

In this manner, the signals of the effective screen in the first field of the 40th through the 557th horizontal intervals are recorded in the first and second segments. The signals of the effective screen in the second field of the 603rd through the 1120th horizontal intervals are recorded in the third and fourth segments in like manner, except that the correlations between the odd- and even-numbered horizontal intervals on the one hand and the first and second channels on the other are reversed. This allows the signals of each frame to be distributed to the first to the fourth segment. When an offset of, say, a half horizontal interval is provided between segments for recording, the two-channel four-segment recording is effected as depicted in Fig. 20.

This is how HDTV signals are recorded with the prior art apparatus. To reproduce the HDTV signals thus recorded illustratively requires a one-field memory whereby the above-described recording process is reversed. In this manner, normal speed reproduction of the HDTV signals is carried out satisfactorily.

Where the HDTV signals are to be reproduced at variable speed with the head scanning along the locus illustrated by broken line, the head azimuth causes the head to reproduce only the signals in the shaded portions on each channel. Typical reproduction signals of this case are as depicted in Figs. 22 (A) and 22 (B).

One disadvantage of these reproduction signals is that there occurs a disturbance in the chrominance signal continuity upon a track jump (TJ) from the first segment to the second, or from the third segment to the fourth. As a result, processing these reproduction signals fails to properly reconstruct the chrominance signals for normal speed reproduction.

One solution to the above disadvantage is to align the recording positions of the chrominance signals by alternating a 1.5-fold horizontal interval and a half horizontal interval as the offset between segments. However, the increase of the offset is subject to the constraints dictated by the use efficiency of the recording medium.

One drawback of the above solution involving the aligning of the chrominance signal recording positions is as follows: In the above example, the chrominance signal at the beginning of each segment is changed. In variable speed reproduction, there is no knowing with which segment the beginning of the scan locus coincides. This makes it very difficult to identify and reconstruct the chrominance signals.

## SUMMARY OF THE INVENTION:

It is therefore an object of the present invention to overcome the above deficiencies and disadvantages of the prior art and to provide a video signal recording apparatus which is simply constructed and capable of variable speed reproduction of high quality.

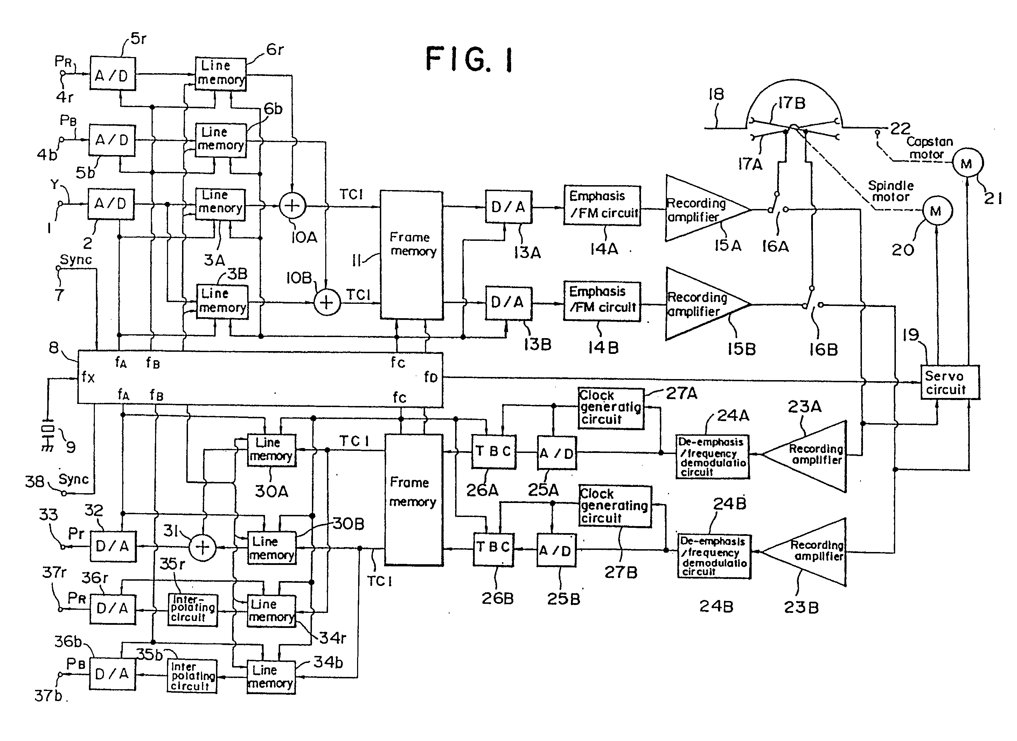

In carrying out the invention, there is provided a video signal recording apparatus wherein a first and and a second chrominance signal are sampled alternately for each horizontal interval from a video signal, the video signal containing luminance signals and the first and second chrominance signals. The sampled chrominance signals are contracted on the time base (by line memories 6r and 6b in Fig. 1) while the luminance signals are elongated thereon (by line memories 3A and 3B). The elongated luminance signals and the contracted chrominance signals are multiplexed on a time division basis (by adders 10A and 10B). The multiplexed signals are divided into two channels (through frame memory 11) in such a way that each channel has chrominance signals of the same kind. The divided signals are recorded, sequentially and two channels at a time, by two-channel heads (17A and 17B) having a different azimuth each. Each field of the signals is recorded by two scans of a rotating head arrangement (driven by spindle motor 20) sequentially onto inclined tracks.

With this video signal recording apparatus, the luminance and chrominance signals are multiplexed on a time division basis before being sent to two channels, each channel handling only one type of the chrominance signals. This makes it possible to leave intact the chrominance signal continuity where track jumps occur during variable speed reproduction. Thus the apparatus of simple circuitry still affords high-quality recording and reproduction of HDTV signals.

BRIEF DESCRIPTION OF THE DRAWINGS:

Fig. 1 is a schematic diagram of a video signal recording apparatus as a first embodiment of the present invention;

Fig. 2 is a set of views showing waveforms associated with the embodiment;

Fig. 3 is a view of a typical recording pattern associated with the embodiment;

Fig. 4 is a set of views depicting recording signals for use with the embodiment;

Fig. 5 is a set of views illustrating reproduction signals for use with the embodiment;

Fig. 6 is a view showing a typical recording pattern with respect to the scanning locus in five-fold speed mode reproduction;

Fig. 7 is a set of views depicting how variable speed reproduction signals are reconstructed with the embodiment;

Fig. 8 is a view of a typical recording pattern for use with a second embodiment of the invention;

Fig. 9 is a view of another typical recording pattern for use with the embodiments;

Fig. 10 is a set of views illustrating recording signals for use with a third embodiment of the invention;

Fig. 11 is a view showing how the head locus is typically formed in 2.5-fold speed mode;

Fig. 12 is a view depicting how the head locus is typically formed in double speed mode;

Fig. 13 is a view describing how the head locus is typically formed in triple speed mode;

Fig. 14 is a schematic diagram of a reproduction system incorporated in the embodiments;

Fig. 15 is a schematic diagram of a vertical filter for use with the luminance signals in the embodiments;

Fig. 16 is a set of timing charts associated with frame memories in the embodiments;

Fig. 17 is a set of views depicting typical monitor outputs in variable speed reproduction (2.5-fold speed mode);

Fig. 18 is a set of views illustrating reproduction signals in connection with the third embodiment;

Fig. 19 is a set of views showing reproduction signals in connection with a typical prior art setup;

Fig. 20 is a view of a typical recording pattern associated with the prior art setup;

Fig. 21 is a set of views showing recording signals for use with the prior art setup; and

Fig. 22 is a set of views depicting reproduction signals for use with the prior art setup.

DESCRIPTION OF THE PREFERRED EMBODIMENT:

In Fig. 1, reference numeral 1 is an input terminal for a luminance signal Y derived through demodulation from an HDTV signal. The signal from the input terminal 1 is supplied to line memories 3A and 3B via an A/D converter 2. Input terminals 4r and 4b admit chrominance signals (color difference signals R-Y: $P_R$; B-Y: $P_B$) also derived through demodulation from the HDTV signal. The signals from the input terminals 4r and 4b are fed to line memories 6r and 6b via A/D converters 5r and 5b, respectively.

Reference numeral 7 is an input terminal for a synchronizing signal SYNC separated from the HDTV signal. The signal from the input terminal 7 is supplied to a control circuit 8. In turn, the control circuit 8 generates various control and clock signals, to be described later, in accordance with a time base clock signal from a time-base generator 9 and with the abovementioned synchronizing signal.

In the setup above, the signal from the memory 3A and that from the memory 6r are combined by an adder 10A; the result is supplied to a frame memory 11. The signal from the memory 3B and that from the memory 6b are combined by an adder 10B; the result is also supplied to the frame memory 11.

The signals from the frame memory 11 are sent to emphasis/FM circuits 14A and 14B via D/A converters 13A and 13B, respectively. The emphasized and frequency-modulated signals are supplied to heads 17A and 17B on a head drum via recording amplifiers 15A and 16B as well as via recording/reproduction changeover switches 16A and 16B before being recorded onto a tape 18. The reference signal from the control circuit 8 is sent to a servo circuit 19. The signal from the servo circuit 19 drives a spindle motor 20 of the head drum. The signal from the servo circuit 19 also drives a capstan motor 21 which in turn drives a capstan 22 to transport the tape 18.

The signals recorded on the tape 18 are reproduced by the heads 17A and 17B. After reproduction from the tape 18, the signals are supplied to the servo circuit 19 via the switches 16A and 16B as well as to de-emphasis/frequency demodulation circuits 24A and 24B via reproduction amplifiers 23A and 23B. The de-emphasized and frequency-demodulated signals are sent to TBC circuits 26A and 26B via A/D converters 25A and 25B. The signals from the circuits 24A and 24B are supplied to clock generating circuits 27A and 27B. In turn, the circuits 27A and 27B generate clock signals which are sent to the A/D converters 25A and 25B as well as to the TBC circuits 26A and 26B.

The signals from the TBC circuits 26A and 26B are fed to a frame memory 28. In turn, the frame memory 28 sends signals to line memories 30A and 30B. The signals from the line memories 30A and 30B are combined by an adder 31. The resulting signal from the adder 31 is output through a D/A converter to an output terminal 33 for the luminance signal Y.

The frame memory 28 also supplies signals to line memories 34r and 34b. In turn, the signals from the line memories 34r and 34b are sent to interpolating circuits 35r and 35b, respectively. The signals from the interpolating circuits 35r and 35b are supplied via D/A converters 36r and 36b to output terminals 37r and 37b for chrominance signals $P_R$ and $P_B$, respectively.

Meanwhile, the synchronizing signal SYNC from the control circuit 8 is output to an output terminal 38.

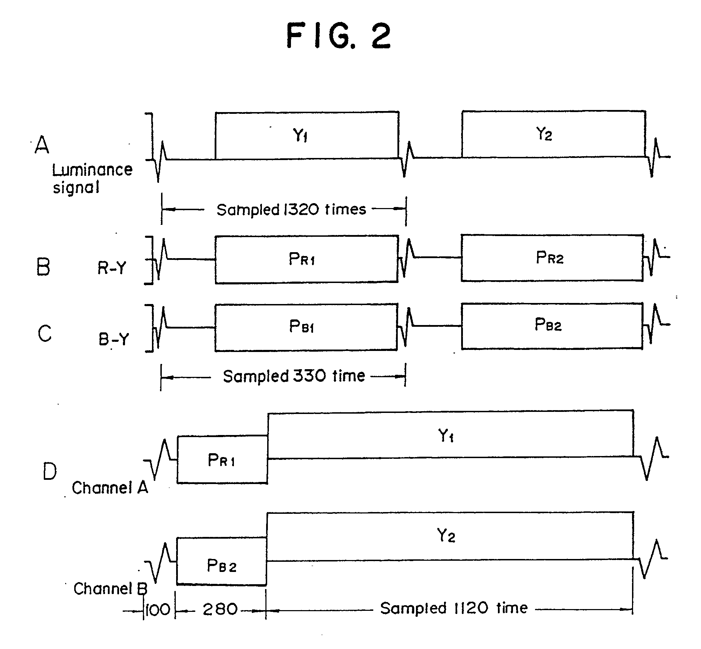

In recording HDTV signals with the above-described setup, the luminance signal Y and chrominance signals $P_R$ (R-Y) and $P_B$ (B-Y), depicted in Figs. 2 (A) and 2 (B), are first sampled with clock signals having frequencies of $f_A$ and $f_B$ from the control circuit 8. After being sampled, the signals are converted from analog to digital format and written to the memories 3A, 3B, 6r and 6b.

The frequency $f_A$ is selected to be both the simplest possible integral ratio of the HDTV time base clock (74.25 MHz) and a multiple of the HDTV horizontal frequency ($f_{H1}$ = 33.75 kHz). For example,

$$f_A = \frac{3}{5} \times 74.25 = 44.55 \text{ [MHz]} = 1320\, f_{H1}$$

The frequency $f_B$ is chosen to be a quarter of $f_A$.

That is, when the time-base generator 9 having the frequency of 44.55 MHz supplies its clock signal to the control circuit 8, the supplied signal is directly output as the clock signal having the frequency $f_A$. At the same time, the clock signal at the frequency $f_B$ is obtained as one-fourth of the supplied signal.

In this manner, the luminance signal Y is sampled 1320 times and the chrominance signals $P_R$ and $P_B$ are sampled 330 times per horizontal scanning line. The sampled signals are written to the memories 3A, 3B, 6r and 6b. In writing the signals, each horizontal synchronizing signal is used as the start signal. The memories 3A and 3B admit the signals for writing therein alternately at each horizontal interval.

The written signals are read out with a clock signal having a frequency of $f_C$ for compression or elongation on the time base. When read out, the signals are combined by the adders 10A and 10B to form the so-called TCI (time compressed integration) signal such as is shown in Figs. 2 (D) and 2 (E).

The clock frequency $f_C$ of the TCI signal, the number L of horizontal scanning lines per frame, and the sampling rate S per horizontal scanning line are determined as follows: When formed from the HDTV signal, the TCI signal is recorded on two tracks simultaneously. This requires the following equation to be satisfied:

$$\frac{1125 \times 1320}{44.55 \times 10^6} = \frac{L \times S}{2\, f_C}$$

where, the values L and S are determined based on the characteristics of the video signal recording apparatus implemented. For example, where the recording format is such that L = 1332 and S = 1500, the frequency $f_C$ is to be as follows:

$$f_C = 29.97 \text{ [MHz]} = 880\, f_{H1} = \tfrac{37}{55}\, f_A$$

Thus the clock signal having the frequency $f_C$ is supplied to the memories 3A, 3B, 6r and 6b. Illustratively 50 clock pulses since the beginning of a horizontal synchronizing signal, the chrominance signals $P_R$ and $P_B$ written in the line memories 6r and 6b are sampled 280 times therefrom for an effective screen interval. Thereafter, the luminance signal Y written in the line memories 3A and 3B is sampled 1120 times therefrom for the effective screen interval and 100 times for the synchronous interval.

The above operations form the TCI signal on two channels A and B, as depicted in Figs. 2 (D) and 2 (E). The reading of the signals is carried out with every other horizontal synchronizing signal used as the start signal. Since the frequency $f_C$ is greater than 1/2 $f_A$, one horizontal interval of the actual TCI signal is a little shorter than twice that of the HDTV signal.

The TCI signal thus generated is written successively to the frame memory 11.

From the frame memory 11, the signal written therein is read out therefrom by use of the clock signal having the frequency $f_C$. That is, during the first scan (first segment) on the tape 18 by the heads 17A and 17B, the signal is read successively from the frame memory 11 for every other horizontal interval by use of the clock signal having the frequency $f_C$; during the second scan (second segment), the signal is read likewise from the frame memory 11 for the remaining every other horizontal interval. After being read out, the signals are converted from digital to analog format, emphasized, frequency-modulated, and recorded onto the tape 18 by the heads 17A and 17B. At this time, the control circuit 19 supplies the servo circuit 19 with the reference signal having a frequency of $f_D$ (= 60 Hz). This causes the heads 17A and 17B to rotate at the frequency $f_D$. Meanwhile, the tape 18 is being transported so as to attain a predetermined track pitch.

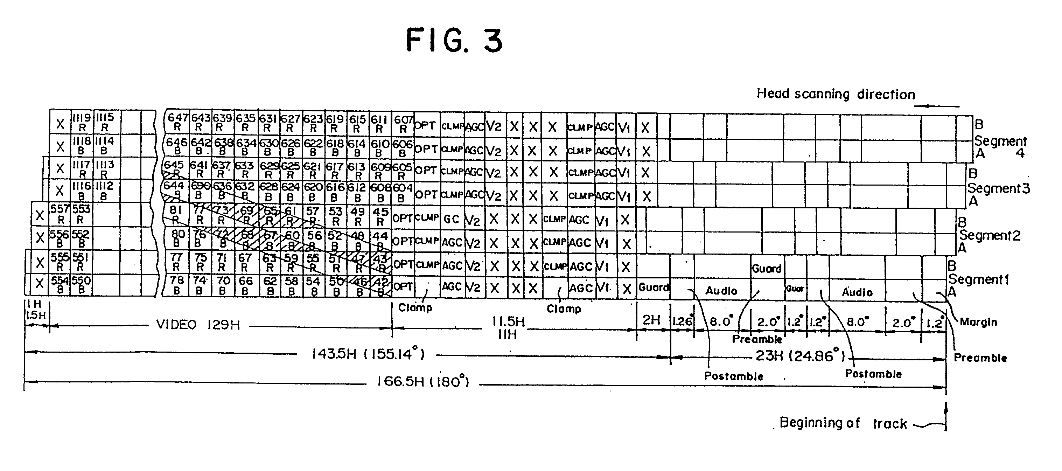

In the manner described, one frame, illustratively shown in Fig. 3, is recorded in a two-channel four-segment recording pattern onto the tape 18.

In this embodiment, the TCI signal is divided into two channels as depicted in Figs. 4 (A) and 4 (B), the first channel dealing with even-numbered horizontal interval signals, the second channel handling odd-numbered horizontal interval signals. Under this scheme, the luminance and chrominance signals belonging to the same horizontal interval are multiplexed on a time division basis.

The TCI signal may be formed in other ways. In an alternative arrangement, the chrominance signals $P_B$ and $P_R$ (red and blue color difference signals) of the color video signal (also containing the luminance signal) are linearly sequenced and time compressed at the same time. Then the chrominance signals are multiplexed with the luminance signal (at its horizontal blanking interval), and the multiplexed signal (TCI (time compressed integration) signal linearly sequenced in color) is time elongated. In another alternative, the luminance signal is time elongated, while the chrominance signals $P_B$ and $P_R$ are linearly sequenced and time compressed. The time elongated luminance signal is multiplexed on a time division basis with the time compressed chrominance signals.

Illustratively, the 42nd and the 43rd horizontal interval signals of the effective screen are recorded in the first scan (first segment); the 44th and the 45th horizontal interval signals are recorded in the second scan (second segment). Thereafter, every two horizontal interval signals are alternately recorded in the first and the second segments.

In this manner, the signals in the first field of the effective screen from the 42nd to the 557th horizontal interval are recorded in the first and second segments. Likewise, the signals in the second field of the effective screen from the 604th to the 1119th horizontal interval are recorded in the third and fourth segments. The signals of one frame are thus divided into the first through the fourth segments. When an offset of, say, a half horizontal interval is provided between segments, the signals are recorded in the two-channel four-segment pattern illustrated in Fig. 3.

In the recording pattern of Fig. 3, the portion ahead of the video signal recording area in the head scanning direction is provided with a digital audio signal recording area as illustrated. Each track has a tape winding angle of 180 degrees corresponding to 166.5 horizontal intervals. Of these, 23 horizontal intervals (24.86 degrees) are used as the audio signal recording area. Approximately 1.2 degrees at the front end are used for a margin, followed by 2.0 degrees for a preamble and 8.0 degrees for a digital audio signal recording area on the third and fourth channels. The next 1.2 degrees are used for a postamble, followed by 1.2 degrees for a guard portion between audio signals. The next 2.0 degrees are used as a preamble, followed by 8.0 degrees for a digital audio signal recording area on the first and second channels and 1.26 degrees for a postamble.

The audio signal recording area is succeeded by a guard portion between audio and video signals for two horizontal intervals. In the next 11 or 11.5 horizontal intervals, there are provided such information signals as vertical synchronizing signals $V_1$ and $V_2$, an AGC reference level and a clamp level. Following the information signals are the divided portions constituting the TCI signal for 130 horizontal intervals, the division being carried out as illustrated. The TCI signal recording area is followed by a margin of a half or one horizontal interval.

In normal speed reproduction with the above-described embodiment, the heads 17A and 18A and the tape 18 are run under servo control so that when the reference signal having the frequency $f_D$ and the reproduction signals from those heads are partially supplied to the servo circuit 19, the signals match the above-mentioned recording pattern. The reproduction signals are subjected to the operations for reversing the above recording process (TBC and interpolating operations included) so that the luminance signal Y and the chrominance signals $P_R$ and $P_B$ are reproduced.

In the manner described above, the HDTV signal is recorded and reproduced in normal speed mode.

For variable speed reproduction, by contrast, the heads illustratively trace the scanning locus indicated by oblique lines in Fig. 3 showing the recording pattern. Each channel head reproduces only the respectively shaded part of the HDTV signal. For example, what is reproduced here are the signals depicted in Figs. 5 (A) and 5 (B). The depicted reproduction signals fall only in the video signal category.

When considered in more detail, the chrominance signals are always reconstructed with no disturbance in their continuity during track jumps (TJ) from the first segment to the second, from the second to the third, from the third to the fourth, and from the fourth to the first segment.

The horizontal intervals distributed to the respective channels are reconstructed as follows: Fig. 6 shows a typical recording pattern with respect to the scanning locus in five-fold speed mode reproduction. In Fig. 6, the head for the first segment is shown scanning the first, second, third, fourth and first segments, in that order; the head for the second segment scans the second, third, fourth, first and second segments, in that order.

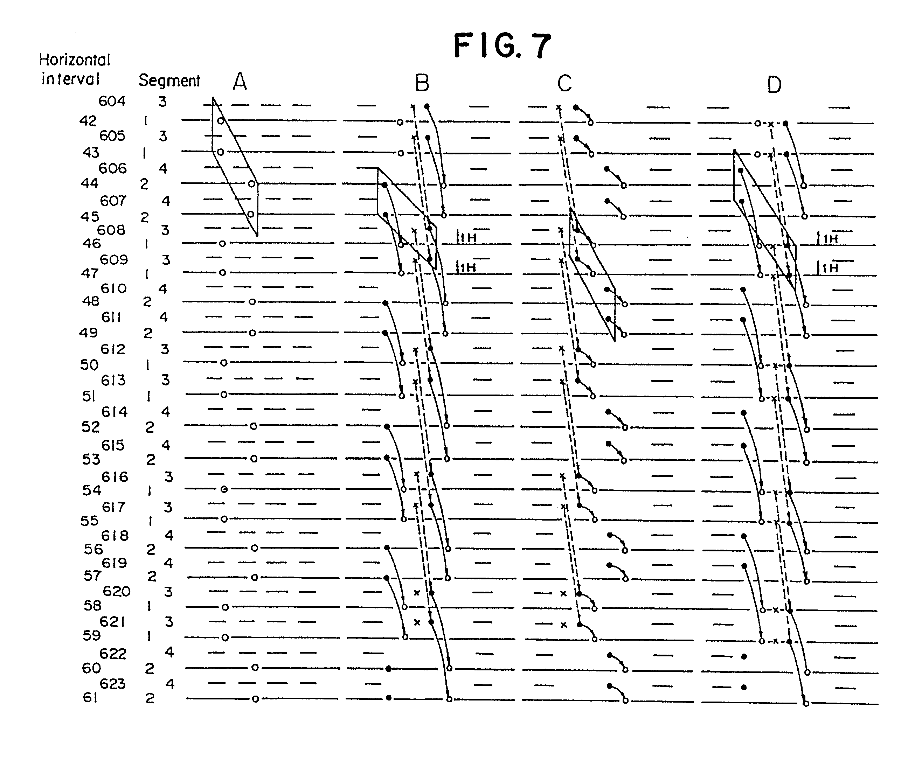

More specifically, when the heads for the first and second segments reproduce the first and second segments, respectively, the signals are normally reproduced and reconstructed unchanged, as depicted in Fig. 7 (A).

But if the head for the first segment reproduces the second segment and the head for the second segment reproduces the third, what is reproduced here are the signals indicated by a point (.) and a cross (x) on the left-hand side of Fig. 7 (B). For reconstruction, both kinds of signals are regarded as the signal with the small hollow circle (o). Here, each signal with the point (.) is considered substantially equal in relative position to the original signal displaced to the right on the same horizontal scanning line.

When the head for the first segment reproduces the third segment and the head for the second segment reproduces the fourth, two kinds of signals indicated by a cross (x) and a point (.) are reproduced, as shown in Fig. 7 (C). Because each signal with the cross (x) is offset between segments, what is actually reproduced is the signal with the point (.) shown on the left. These signals are each regarded as the signal with the small hollow circle (o). Each signal with the point (.) is considered equal to its original signal in terms of relative position.

When the head for the first segment reproduces the fourth segment and the head for the second segment reproduces the first, two kinds of signals indicated by a point (.) and a cross (x) are reproduced, as depicted in Fig. 7 (D). Because each signal with the cross (x) is offset between segments, what is actually reproduced is the signal with the point (.) on the right. For reconstruction, these signals are each considered to be the signal with the small hollow circle (o). Here, each signal with the point (.) is considered substantially equal in relative position to the original signal displaced to the right on the same horizontal scanning line.

The second field is likewise reproduced by simply switching the first, second, third and fourth segments in the above description.

Thus with the above-described embodiment, the horizontal intervals distributed to the channels are properly reconstructed in variable speed reproduction.

It is to be noted that if the ratio of speed variation for reproduction is an odd-numbered multiple, the head for the second segment reproduces the same segment reproduced by the head for the first segment. This can lead to faulty signal reconstruction.

It should also be noted that if the scan locus formed by the head for the first segment begins with the second segment, the positional relations between the segments may be reversed.

Thus for this embodiment to function normally, the following conditions must prevail: that the ratio of speed variation for reproduction is to be an odd-numbered multiple, and that the head for the first segment is to follow for reproduction the scan locus from the beginning of the first segment on. As long as these conditions are satisfied, all kinds of variable speed reproduction are carried out properly in the manner described above.

As described, the embodiment has the luminance and chrominance signals multiplexed on a time division basis over two channels, with the result that there is one chrominance signal on each channel, i.e., at each head azimuth. Track jumps during variable speed reproduction do not disrupt the chrominance signal continuity. Thus the embodiment is simply constructed and yet capable of recording and reproducing the HDTV signal with high levels of quality.

With the above-described embodiment, the luminance signals of four consecutive horizontal scanning intervals are divided into and recorded on four tracks that constitute one field. Thus in case of a track jump, the luminance signals of substantially continuous horizontal scanning intervals may be output. Because the luminance and chrominance signals belonging to the same horizontal scanning interval are multiplexed on a time division basis, the signals are processed with relative ease, and the memory arrangement and the hardware setup can be small in scope.

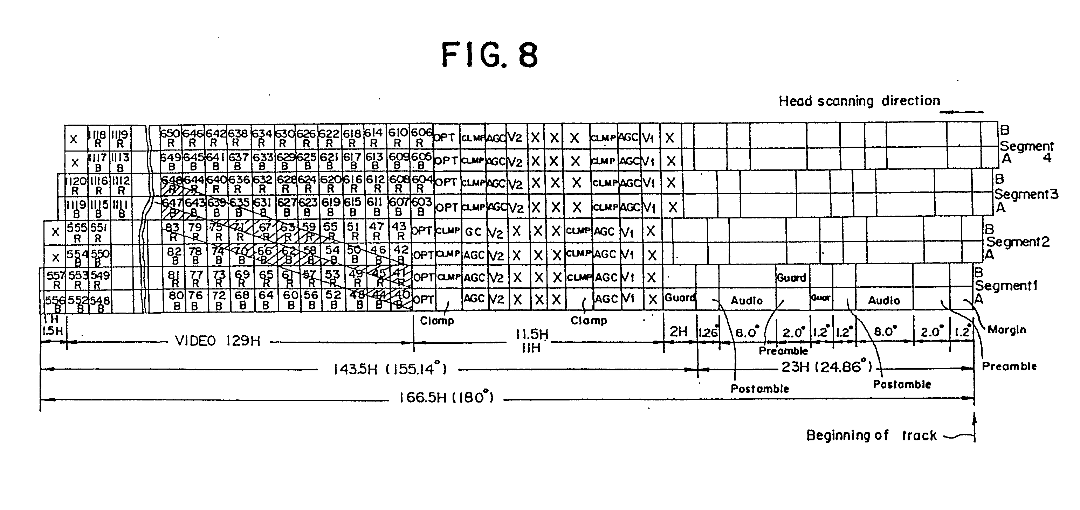

With the embodiment above, the effective lines of one field are shown ranging from the 42nd line to the 1119th. However, this range is not limitative of the effective lines for use with the invention. A second embodiment of the invention may use a recording pattern depicted in Fig. 8 in which the effective lines range from the 40th line to the 1120th.

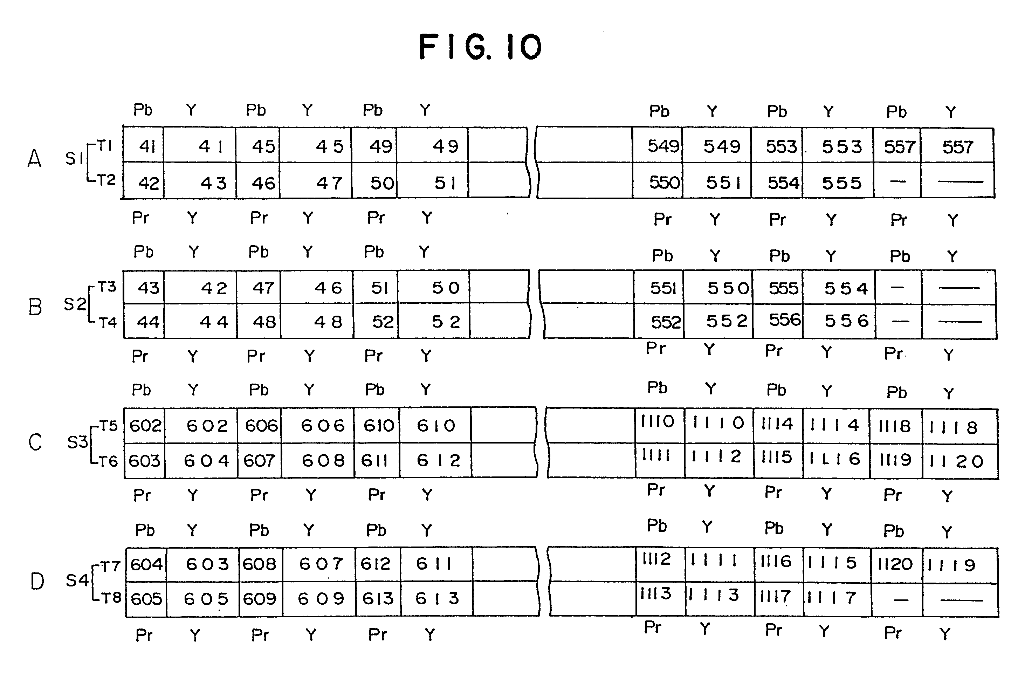

Fig. 10 is a set of views illustrating recording signals for use with a third embodiment of the invention. The recording signals S1 (T1, T2), S2 (T3, T4), S3 (T5, T6) and S4 (T7, T8) of Fig. 10, a half field long each, are supplied to four rotating magnetic heads during the formation of a track pattern. These signals are identified individually in Fig. 10 by the line numbers of the luminance signal Y and chrominance signals $P_R$ and $P_B$. The effective lines are from the 41st line to the 1120th.

The line signals of the luminance signal Y are arranged in the order of segment inclined track recording signals T1, T3, T2, T4, T1, T3, T2, T4, etc., and T5, T7, T6, T8, T5, T7, T6, T8, and so on. Of the recording signals T1 through T8 of each segment inclined track, those having odd numbers attached thereto belong to the chrominance signal $P_B$ and those with even numbers attached thereto belong to the chrominance signal $P_R$.

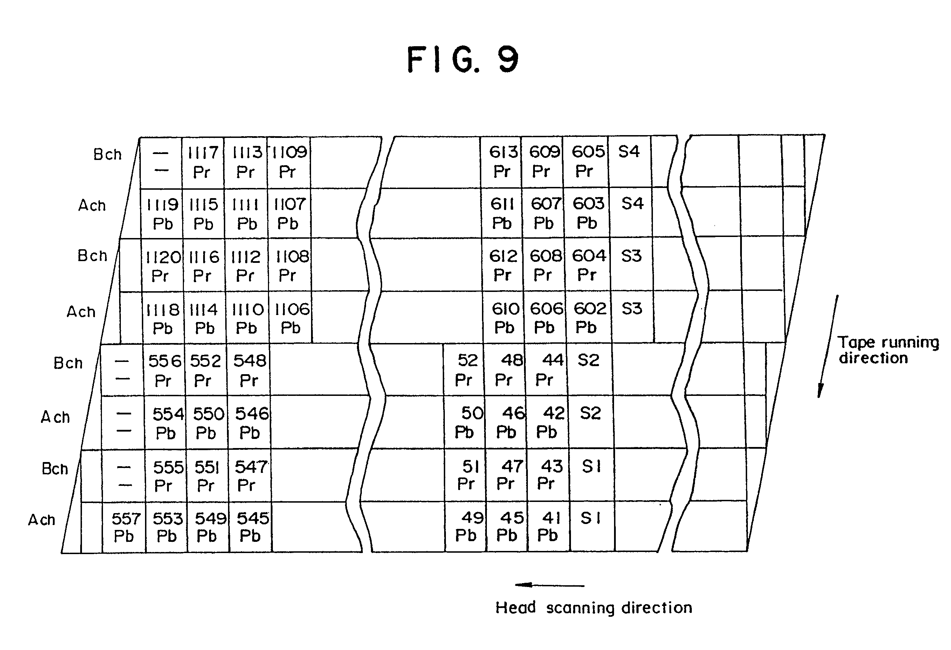

Fig. 9 shows a recording pattern formed on the tape when the recording signals of Fig. 10 are supplied to the rotating magnetic heads. In Fig. 9, the adjacent A and B channels correspond to two segment inclined tracks on which the signals are simultaneously recorded. Each number stands for a line number of the luminance signal. The line numbers of the chrominance signals are omitted. The recording signals T1, T3, T5 and T7 of Fig. 10, a half field long each, are recorded onto the A channel from bottom to top in Fig. 9; the recording signals T2, T3, T6 and T8 are likewise recorded onto the B channel from bottom to top. Between two segment inclined tracks, the recording signals S1 through S4 are displaced on the magnetic tape by 0.5 H (H: magnetic tape length corresponding to a horizontal interval).

As is readily seen from the recording pattern of Fig. 9, what characterizes this embodiment of the color video signal recording apparatus is that the recording signals on each channel, i.e., at each azimuth, have only one chrominance signal: $P_R$ or $P_B$. Another thing that characterizes the embodiment is that for each segment, the B channel records a luminance signal that occurs two lines later on the A channel on which signal recording is performed simultaneously.

Thus in variable speed reproduction, the chrominance signals are accurately reconstructed even if a head jumps a segment inclined track on the magnetic tape. In particular, when (N + 0.5)-fold speed mode reproduction is carried out, substantially natural images may be output by rearranging the signals in the same manner as in normal speed reproduction.

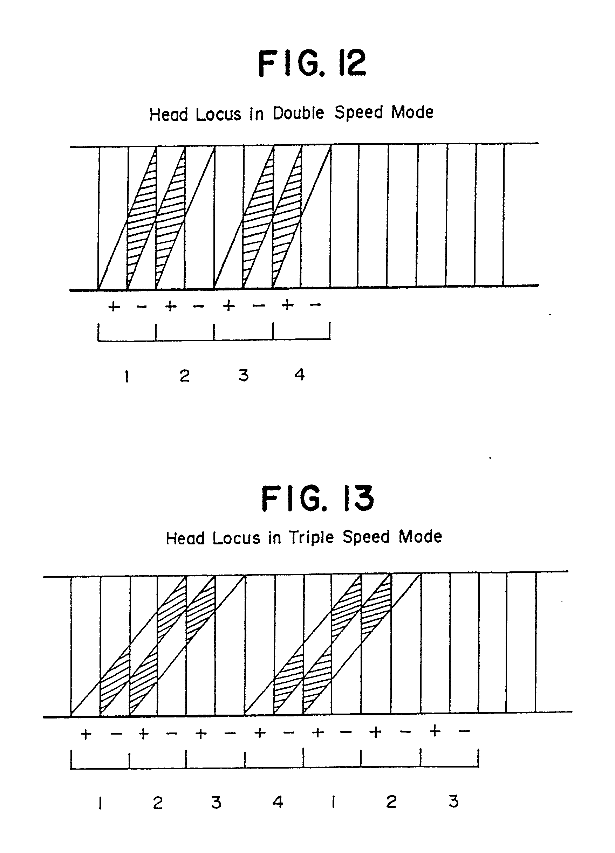

Fig. 12 depicts how the head locus is typically formed in double speed mode, and Fig. 13 shows how the head locus is typically formed in triple speed mode. These scan loci are formed by the rotating magnetic head relative to the magnetic tape in variable speed reproduction both with the prior art setup and with the embodiments of the invention. Figs. 12 and 13 also illustrate how the reproduction signals entail noises (shaded in the figures) attributable to the mismatch between the azimuth of the rotating magnetic head gap and the recording azimuth of the segment inclined tracks. In these two figures, symbols ( + ) and (-) stand for discrepancies in the recording azimuth of the segment inclined tracks.

As indicated in Figs. 12 and 13, a multiple ratio of speed variation, be it an odd or even number, causes each noise bar position to overlap with a half field on the screen during reproduction as long as the ratio is an integer.

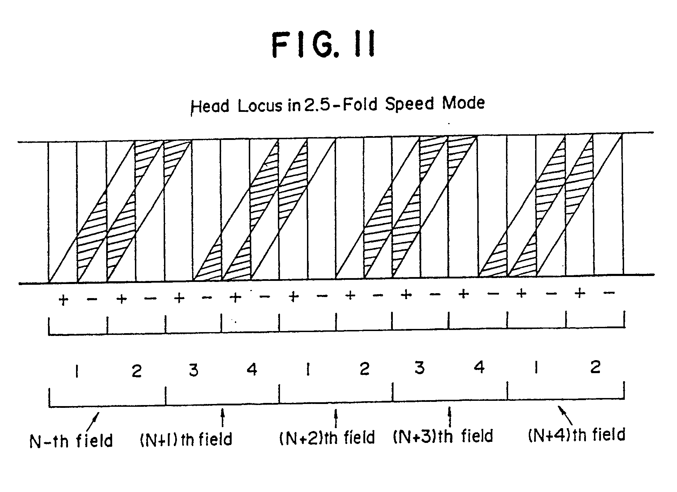

Fig. 11 depicts how the scan locus is typically formed in 2.5-fold speed mode by the rotating magnetic head relative to the segment inclined tracks on the magnetic tape. The magnetic head may be that of the embodiment of the invention or that of the prior art. Fig. 11 also shows how the reproduction signals entail noises (shaded in the figure) attributable to the mismatch between the azimuth of the magnetic head gap and the recording azimuth of the segment inclined tracks.

The head locus of Fig. 11 indicates that when variable speed reproduction is in (N + 0.5)-fold speed mode (N: 0 or a positive or negative integer), each noise bar position on the screen varies with a half field and does not overlap therewith. This applies to the color video signal recording method of both this invention and the prior art.

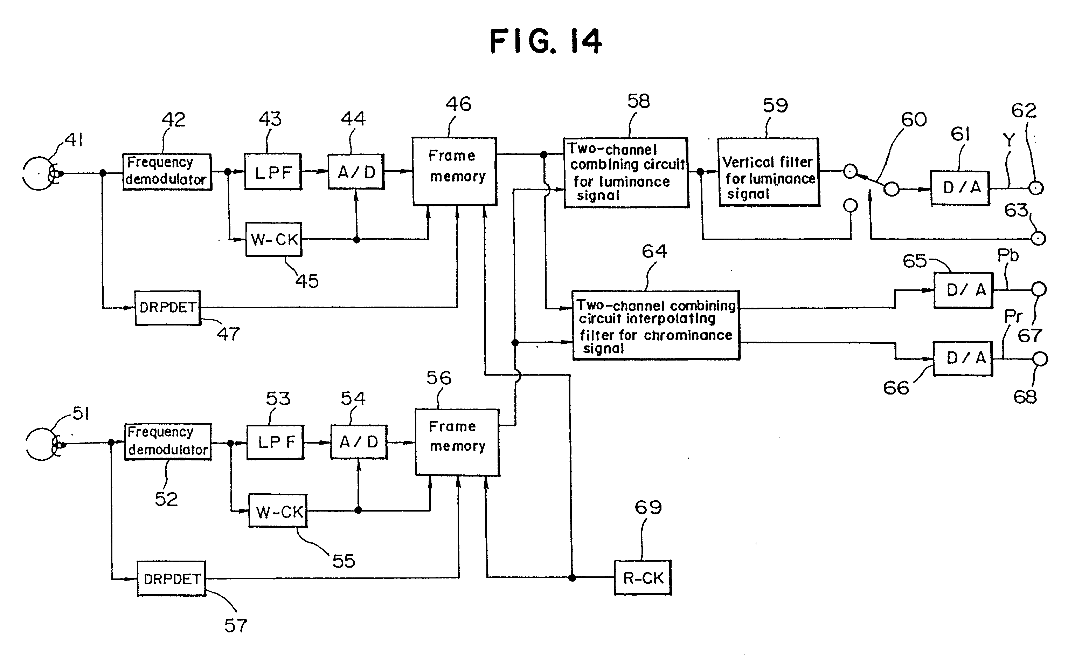

Referring now to Fig. 14, there will be described a typical reproduction system of the video signal recording apparatus, the system specifically taking into account the requirements for variable speed reproduction. In Fig. 14, reference numerals 41 and 51 are a pair of rotating magnetic heads for the A and B channels, respectively, the heads reproducing signals of two tracks simultaneously. The reproduction signals from the heads 41 and 51 are supplied to frequency demodulators 42 and 52 (de-emphasis circuits included) and to drop-out detectors 47 and 57. The outputs from the frequency demodulators 42 and 52 are sent via low-pass filters 43 and 53 to A/D converters 44 and 54 for analog to digital signal conversion. The outputs of the A/D converters 44 and 54 are supplied and written to frame memories 46 and 56 for time base error correction, drop-out correction, de-shuffling and time base compression/elongation. Write clock signal generating circuits 45 and 55 include PLL (phase locked loop) circuits. The circuits 45 and 55 generate write clock signals whose frequency is three to four times the color subcarrier frequency synchronized with the horizontal synchronizing signals and color burst signals (containing jitter each) separated from the outputs of the frequency demodulators 42 and 52. The generated write clock signals are supplied to the frame memories 46 and 56. The write clock signal generating circuits 42 and 52 also supply the write clock signals to the A/D converters 44 and 54. The drop-out detectors 47 and 57 receive high frequency reproduction signals from the rotating magnetic heads 41 and 51, respectively. When the amplitude of the envelope is below a predetermined level, the drop-out detectors output a drop-out detection signal to the frame memories 46 and 56.

A read clock signal generating circuit 69 generates a read clock signal, with no jitter included, at the same frequency as the write clock signal. The generated read clock signal is supplied to the frame memories 46 and 56. The frame memories 46 and 46 provide TCI (time compressed integration) signals after time base error correction, de-shuffling and time base compression/elongation. The TCI signals are supplied to a two-channel combining circuit 58 for the luminance signal as well as to a two-channel combining circuit/interpolating filter 64 for the chrominance signals. In the circuit 58 and filter 64, the TCI signals are combined. The output of the combining circuit 58 is sent to a vertical filter 59 for the luminance signal. Either of the outputs from the circuit 58 and filter 59 is selected by a changeover switch 60 and supplied to a D/A converter 61. The D/A converter 61 converts what it receives into an analog luminance signal Y for output from an output terminal 62. The changeover switch 60 is set to the circuit 58 position for normal speed reproduction or to the vertical filter 59 position for shuttle reproduction under control by a normal/shuttle changeover control signal coming from an input terminal 63. Two chromatic signals from the combining circuit/interpolating filter 64 are supplied to D/A converters 65 and 66 for conversion to analog chromatic signals $P_B$ and $P_R$. The analog chromatic signals are output from output terminals 67 and 68.

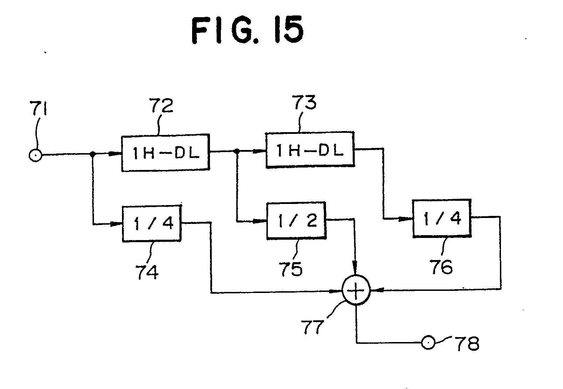

Fig. 15 is a schematic diagram of a vertical filter for use with the luminance signals in the reproduction system of Fig. 14. In Fig. 15, a luminance signal from an input terminal 71 is supplied to cascade circuits in delay circuits 72 and 73 having a delay time of one horizontal interval (1H) each. A luminance signal from the input terminal 71, a luminance signal delayed by 1H by the delay circuit 72, and a luminance signal delayed by 2H by the delay circuit 73 are supplied respectively via coefficient multipliers 74, 75 and 76 to an adder 77. The multipliers 74, 75 and 76 turn the levels of the respective luminance signals to 1/4/ 1/2 and 1/4 of their original. The adder 77 adds up the luminance signals, and the sum is output from an output terminal 78. Thus the vertical filter 59 provides band restriction on the reproduction signals so that they represent substantially natural images.

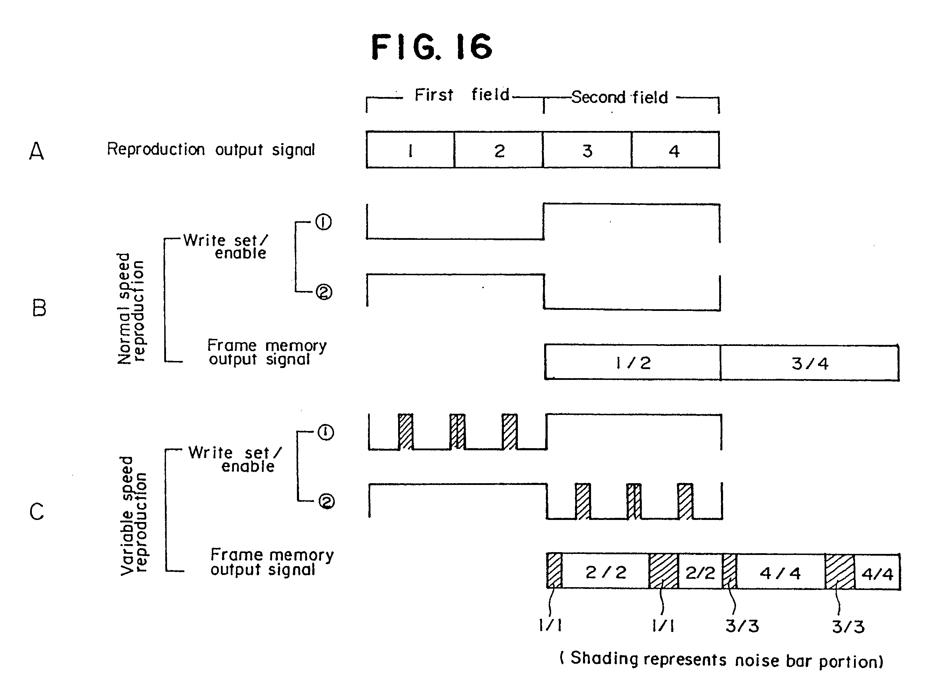

Below is a description, with reference to Fig. 16, of how normal speed reproduction and 2.5-fold speed reproduction are implemented by use of the reproduction system of Fig. 14. Fig. 16 is in fact a set of timing charts associated with frame memories in the embodiments. Fig. 16 (A) shows a series of reproduction output signals from the A/D converter 44. Each number in this chart indicates in which scan the corresponding signal is obtained. For example, the first field is shown to comprise two signals, one acquired in the first scan and the other in the second scan. Fig. 16 (B) is a memory timing chart that applies in standard speed reproduction. In Fig. 16 (B), the signal (1) is a write reset/enable signal supplied to the memory area for the first field, and the signal (2) is a write reset/enable signal sent to the memory area for the second field. The signal (1) causes the first and second scan signals to be written to the first field memory area, and the third and fourth scan signals to be written to the second field memory area. In normal speed reproduction, the first, second, third and fourth scan signals correspond to the first, second, third and fourth segment signals, respectively. Thus the first and second segment signals combine to reconstruct the first field; the third and fourth segment signals likewise reconstruct the second field. Thereafter, the original single frame signal is output from the frame memory. In Fig. 16 (B), the indication "1/2" means that the first and second scan signals are used for reconstruction. Fig. 16 (C) is a memory timing chart that applies in 2.5-fold speed reproduction. In this case, a write reset operation is carried out twice in one field. The noise bar interval is controlled so as to suppress the write operation, as indicated by the shading in (1) and (2) of Fig. 16 (C). Thus in the first field memory area, the first scan signal is stored unchanged for the second scan noise bar interval; the second scan signal is written for the other intervals. In the second field memory area, the third scan signal is stored unchanged for the fourth scan noise bar interval; the fourth scan signal is written for the other intervals. The same line is read twice for reconstruction. In both the first and the second field, there is provided a frame memory output signal whose noise bar portions are interpolated by the signals of the odd-numbered scans.

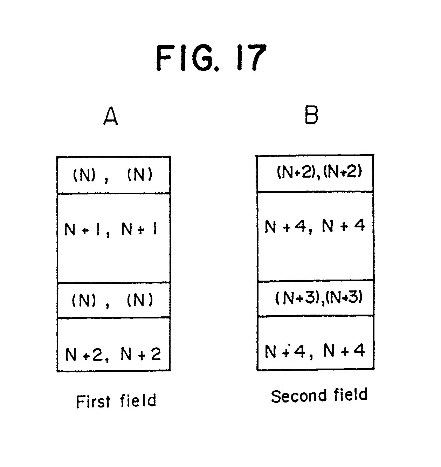

Figs. 17 (A) and 17 (B) illustrate typical screen make-ups during reproduction where the head locus of 2.5-fold speed reproduction mode of Fig 11 is in effect. Each number in the figures represents a field number of the original video signal. Each number in parentheses stands for an interpolated field. For example, if N = 1, the first field of variable speed reproduction is constituted by the first, second and third fields of the original screen; the second field is made up of the third, fourth and fifth fields of the original screen.

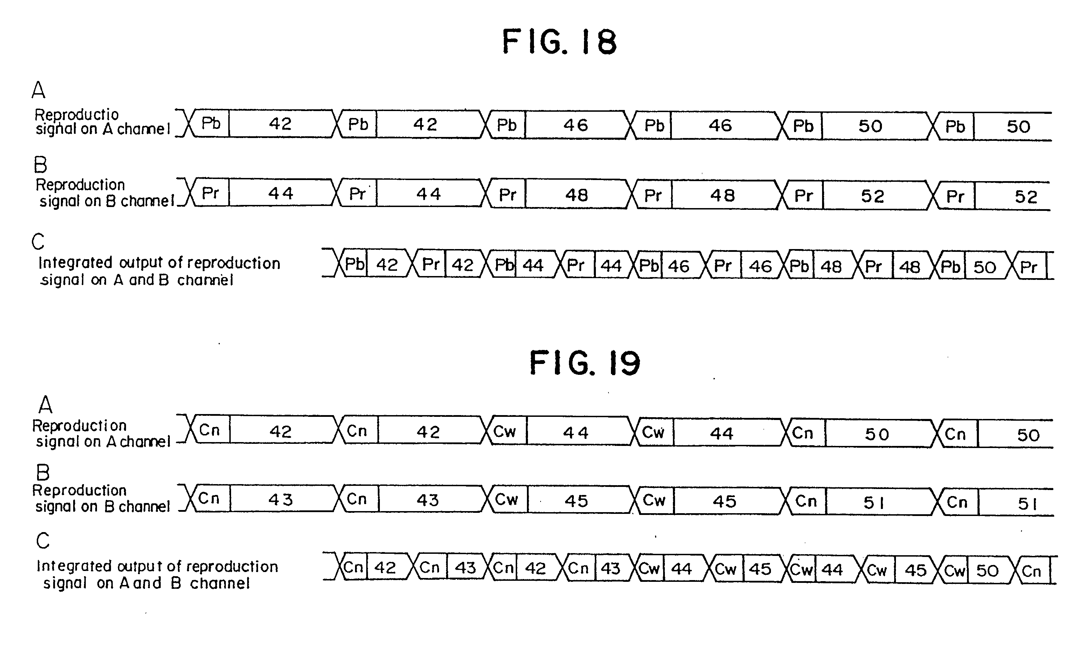

Figs. 18 (A), 18 (B) and 18 (C) depict how reproduction signals are reconstructed with the third embodiment in 2.5-fold speed reproduction mode. The reproduction signals on the A and B channels are shown individually, together with the combined output of the two signals. It should be noted that these figures illustrate the reconstruction process only conceptually and have no direct correspondence with the reproduction system of Fig. 14. Each number represents a line number of the luminance signal. Regarding the color difference, all line numbers are omitted. For example, when a signal containing a luminance signal of 42 horizontal scanning intervals is reproduced in the first scan on the A channel, the abovementioned interpolation process allows the signal containing the same luminance signal of 42 horizontal scanning intervals to occur in the second scan as the reproduction signal. In recording with this embodiment, the B channel includes a luminance signal that occurs two lines later on the A channel, while the same kind of chrominance signals applies to both channels. As a result, the signal containing a luminance signal of 44 horizontal scanning intervals is reproduced in the first scan on the B channel. In the second scan on the B channel, the signal containing the same luminance signal of 44 horizontal scanning intervals is reproduced by interpolation (as in the case of the A channel). With respect to the chrominance signals, the A channel reproduces the chrominance signal $P_B$ alone and the B channel the chrominance signal $P_R$ alone. The reproduction signals shown in Figs. 18 (A) and 18 (B) are obtained in this manner. When the same reconstruction as in normal speed reproduction is carried out, the luminance signal is extracted twice in a row from each of the A and B channels every time the channels are alternated (i.e., A ch, A ch, B ch, B ch, etc.); the chrominance signal is extracted once from each of the two channels ever time the channels are alternated (i.e., A ch, B ch, A ch, B ch, etc.). The extracted signals are combined as shown in Fig. 18 (C). In Fig. 18 (c), the combined output comprises two identical luminance signals interwoven with two alternating chrominance signals $P_B$ and $P_R$. When viewed on the monitor, the combined output has a resolution level half of that for the standard speed reproduction screen but provides a screen of normal hues.

Figs. 19 (A), 19 (B) and 19 (C) illustrate typical reproduction signals of the prior art for comparison with Figs. 18 (A), 18 (B) and 18 (C). As with the above-described setup, the signals on the A and B channels are reconstructed with the prior art in the same manner as in standard speed reproduction. The luminance signal is extracted once from each of the A and B channels every time they are alternated (i.e., A ch, B ch, A ch, B ch, etc.); the chrominance signal is extracted twice in a row from each of the two signals every time they are alternated (i.e., A ch, A ch, B ch, B ch, etc.). The extracted signal are combined as shown in Fig. 19 (C). In Fig. 19 (C), the combined output comprises two identical luminance signals occurring one line apart and interwoven with chrominance signals of the same kind appearing continuously. When viewed on the monitor, the combined output provides a mosaic-looking screen of abnormal hues.

With the embodiments of this invention, a digital velocity error data signal of the reproduced video signal is inserted into guard portions between luminance and chrominance signals in each horizontal interval before storage into memory. The error signal of the digital velocity error data signal separated from the digital reproduced video signal read from memory is used to phase-modulate the clock signal. The resulting phase-modulated clock signal is supplied to the D/A converter to which the digital video signal is sent from memory. This arrangement eliminates the need for a dedicated memory in which to store the velocity error data signal. Without the dedicated memory, the velocity error data signal is made to correspond precisely with the reproduced video signal.

It is to be understood that while the invention has been described in conjunction with specific embodiments, it is evident that many alternatives, modifications and variations will become apparent to those skilled in the art in light of the foregoing description. Accordingly, it is intended that the present invention embrace all such alternatives, modifications and variations as fall within the spirit and scope of the appended claims.

LIST OF REFERENCE NUMBERS

Fig. 1     Block Diagram of First Embodiment
         1, 4r, 4b, 7) Input terminal
         6r, 6b, 3A, 3B) Line memory
         9) Time-base generator

10A, 10B, 31) Adder

11) Frame memory

14A, 14B) Emphasis/FM circuit

15A, 15B) Recording amplifier

17A, 17B) Head

18) Tape

19) Servo circuit

20) Spindle motor

21) Capstan motor

22) Capstan

23A, 23B) Reproduction amplifier

24A, 24B) De-emphasis/frequency demodulation circuit

27A, 27B) Clock generating circuit

28) Frame memory

30A, 30B, 34r, 34b) Line memory

33, 37r, 37b, 38) Output terminal

35r, 35b) Interpolating circuit

Fig. 2    Waveforms
    1) Luminance signal
    2) Sampled 1320 times
    3) Channel A

Fig. 3    Recording Pattern
    1) Head scanning direction
    2) Segment 4
    3) Clamp
    4) Guard
    5) Postamble
    6) Audio
    7) Preamble
    8) Margin
    9) Beginning of track

Fig. 4    Recording Signals

Fig. 5    Reproduction Signals

Fig. 6    Scanning Locus of Five-Fold Speed Mode Reproduction

Fig. 7    Reconstruction of Variable Speed Reproduction Signal
    1) Horizontal interval
    2) Segment

Fig. 8    Recording Pattern of Second Embodiment

Fig. 9    Recording Pattern
    1) Tape running direction
    2) Head scanning direction

Fig. 10    Recording Signals of Third Embodiment

Fig. 11    Head Locus in 2.5-Fold Speed Mode
    1) N-th field
    2) (N + 1)th field

Fig. 12    Head Locus in Double Speed Mode

Fig. 13    Head Locus in Triple Speed Mode

Fig. 14    Reproduction System
    42, 52) Frequency demodulator
    46, 56) Frame memory
    58) Two-channel combining circuit
        for luminance signal
    59) Vertical filter for luminance signal
    64) Two-channel combining circuit/interpolating filter for chrominance signal

Fig. 15    Vertical Filter for Luminance Signal

Fig. 16    Frame Memory Timing Chart
    1) Reproduction output signal
    2) Second field
    3) Third field
    4) Normal speed reproduction
    5) Write set/enable
    6) Frame memory output signal
    7) Variable speed reproduction
    8) (Shading represents noise bar portion.)

Fig. 17    Monitor Output of Variable Speed Reproduction (in 2.5-Fold Speed Mode)
    1) First field
    2) Second field

Fig. 18    Reproduction Signals of Third Embodiment
    A) Reproduction signal on A channel
    B) Reproduction signal on B channel
    C) Integrated output of reproduction signals on A and B channels

Fig. 19    Reproduction Signals of Prior Art Setup

Fig. 20    Prior Art Recording Pattern
    1) Head scanning direction
    2) Tape running direction

Fig. 21    Prior Art Recording Signals

Fig. 22    Prior Art Reproduction Signals

**Claims**

1.  A video signal recording apparatus having a video signal of one field divided into two for two channels corresponding to two different azimuths A and B, the divided signals being recorded concurrently in two scans to two tracks on a recording tape (18), said apparatus comprising:

    first output means (10A, 11) for outputting a first time-divided multiplex signal to a head (17A) having said azimuth A, said first time-divided multiplex signal containing a time-elongated luminance signal of one horizontal interval multiplexed on a time division basis with a first time-compressed chrominance signal of one horizontal scanning interval;

    second output means (10B, 11) for outputting a second time-divided mulitplex signal to a head (17B) having said azimuth B, said second time-divided multiplex signal containing a time-elongated luminance signal of one horizontal interval multiplexed on a time division basis with a second time-compressed chrominance signal of one horizontal scanning interval; and

rotating head means comprising said head (17A) having said azimuth A and said head (17B) having said azimuth B, said rotating head means scanning said recording tape (18) so as to record thereon said first time-divided multiplex signal and said second time-divided multiplex signal.

2. A video signal recording apparatus according to claim 1;

wherein said first output means (10A, 11) outputs in said two scans time-divided multiplex signals of two horizontal scanning intervals, said time-divided multiplex signals being among those comprising luminance signals of four consecutive horizontal scanning intervals; and

wherein said second output means (10B, 11) outputs in said two scans time-divided multiplex signals of two horizontal scanning intervals, said time-divided multiplex signals occurring in other than said two horizontal scanning intervals, said time-divided multiplex signals being among those comprising said luminance signals of four horizontal scanning intervals.

3. A video signal recording apparatus according to claim 1 or 2, wherein said time division multiplexing is carried out in such a manner that said time-divided multiplex signal of two consecutive horizontal scanning intervals contains said chrominance signals of different kinds.

4. A video signal recording apparatus according to claim 1 or 2, wherein said time division multiplexing is carried out in such a manner that said luminance signal and said chrominance signal belong to the same horizontal scanning interval.

5. A video signal recording apparatus according to anyone of claims 1 to 4, wherein said rotating head means comprises four heads, two of which (17A) are installed at 180 degrees to each other and have said azimuth A each, the other two heads (17B) being installed at 180 degrees to each other and having said azimuth B each.

6. A video signal recording apparatus according to anyone of claims 2 to 5, wherein said second output means (10B, 11) outputs said second time-divided multiplex signal containing the luminance signal that occurs two horizontal scanning intervals later than the luminance signal included in said first time-divided multiplex signal.

7. A video signal recording apparatus according to anyone of claims 2 to 6;

wherein said first output means (10A, 11) outputs said first time-divided mulitplex signal containing said luminance signals belonging to (N + 2n) horizontal scanning intervals, where N is the first line number of the effective scanning lines necessary for recording and n = 0, 1 , 2, 3, etc.;
and

wherein said second output means (10B, 11) outputs said second time-divided multiplex signal containing said luminance signals belonging to (N + 2n + 1) horizontal scanning intervals.

# FIG. 1

# FIG. 2

A — Luminance signal

Y1    Y2

Sampled 1320 times

B — R-Y

P_R1    P_R2

C — B-Y

P_B1    P_B2

Sampled 330 time

D — Channel A

P_R1    Y1

Channel B

P_B2    Y2

100    280    Sampled 1120 time

# FIG. 3

Head scanning direction →

EP 0 444 699 A2

| | | | |
|---|---|---|---|
| X | 1119 R | 1115 R | 647 R 643 R 639 R 635 R 631 R 627 R 623 R 619 R 615 R 611 R 607 R OPT CLMP AGC V2 X X X CLMP AGC V1 X | B Segment A 4 |
| X | 1118 B | 1114 B | 646 B 642 B 638 B 634 B 630 B 626 B 622 B 618 B 614 B 610 B 606 OPT CLMP AGC V2 X X X CLMP AGC V1 X | |
| X | 1117 R | 1113 R | 645 R 641 R 637 R 633 R 629 R 625 R 621 R 617 R 613 R 609 R 605 OPT CLMP AGC V2 X X X CLMP AGC V1 X | B Segment 3 A |
| X | 1116 B | 1112 B | 644 B 640 B 636 B 632 B 628 B 624 B 620 B 616 B 612 B 608 B 604 OPT CLMP AGC V2 X X X CLMP AGC V1 X | |
| X | 557 R | 553 R | 81 R 77 R 73 R 69 R 65 R 61 R 57 R 53 R 49 R 45 R OPT CLMP GC V2 X X X CLMP AGC V1 X | B Segment 2 A |
| X | 556 B | 552 B | 80 B 76 B 72 B 68 B 64 B 60 B 56 B 52 B 48 B 44 B OPT CLMP AGC V2 X X X CLMP AGC V1 X | |
| X | 555 R | 551 R | 79 R 75 R 71 R 67 R 63 R 59 R 55 R 51 R 47 R 43 R OPT CLMP AGC V2 X X X CLMP AGC V1 X | B Segment 1 A |
| X | 554 B | 550 B | 78 B 74 B 70 B 66 B 62 B 58 B 54 B 50 B 46 B 42 OPT AGC V2 X X X AGC V1 X Guard Audio Guar Audio | |

1H
1.5H

← VIDEO 129H →    Clamp    11.5H    Clamp    2H 1.26  8.0°  2.0° 1.2° 1.2°  8.0°  2.0° 1.2   Margin

11H    Preamble

← 143.5H (155.14°) →    ← 23H (24.86°) →    Preamble

← 166.5H (180°) →    Postamble    Postamble

Beginning of track

## FIG. 4

A
Ch1 | $P_B$ 42 | $Y_{42}$ | $P_B$ 44 | $Y_{44}$ | $P_B$ 46 | $Y_{46}$ | $P_B$ 48 | $Y_{48}$ |

B
Ch2 | $P_R$ 43 | $Y_{43}$ | $P_R$ 45 | $Y_{45}$ | $P_R$ 47 | $Y_{47}$ | $P_R$ 49 | $Y_{49}$ |

## FIG. 5

A
Ch1 | $P_B$ 42 | $Y_{42}$ | $P_B$ 46 | $Y_{46}$ | $P_B$ 50 | $Y_{50}$ | $P_B$ 54 | $Y_{56}$ | $P_B$ 60 | $Y_{60}$ | $P_B$ 64 | $Y_{64}$ | $P_B$ 68 | $Y_{68}$ | $P_B$ 72 | $Y_{72}$ | $P_B$ 76 | $Y_{76}$ | $P_B$ 644 | $Y_{644}$ |

B
Ch2 | $P_R$ 43 | $Y_{43}$ | $P_R$ 47 | $Y_{47}$ | $P_R$ 51 | $Y_{51}$ | $P_R$ 57 | $Y_{57}$ | $P_R$ 61 | $Y_{61}$ | $P_R$ 65 | $Y_{65}$ | $P_R$ 67 | $Y_{69}$ | $P_R$ 73 | $Y_{73}$ | $P_R$ 77 | $Y_{77}$ | $P_R$ 644 | $Y_{645}$ |

TJ                    TJ

## FIG. 6

1 2 3 4 1 2 3 4 1 2 3 4 1 2 3 4 1 2 3 4 1 2 3 4 1 2 3

EP 0 444 699 A2

# FIG. 7

Horizontal interval / Segment

| Horizontal interval | Segment | A | B | C | D |
|---|---|---|---|---|---|
| 604 | 3 | | | | |
| 42 | 1 | | | | |
| 605 | 3 | | | | |
| 43 | 1 | | | | |
| 606 | 4 | | | | |
| 44 | 2 | | | | |
| 607 | 4 | | | | |
| 45 | 2 | | | | |
| 608 | 3 | | | | |
| 46 | 1 | | 1H | | 1H |
| 609 | 3 | | | | |
| 47 | 1 | | 1H | | 1H |
| 610 | 4 | | | | |
| 48 | 2 | | | | |
| 611 | 4 | | | | |
| 49 | 2 | | | | |
| 612 | 3 | | | | |
| 50 | 1 | | | | |
| 613 | 3 | | | | |
| 51 | 1 | | | | |
| 614 | 4 | | | | |
| 52 | 2 | | | | |
| 615 | 4 | | | | |
| 53 | 2 | | | | |
| 616 | 3 | | | | |
| 54 | 1 | | | | |
| 617 | 3 | | | | |
| 55 | 1 | | | | |
| 618 | 4 | | | | |
| 56 | 2 | | | | |
| 619 | 4 | | | | |
| 57 | 2 | | | | |
| 620 | 3 | | | | |
| 58 | 1 | | | | |
| 621 | 3 | | | | |
| 59 | 1 | | | | |
| 622 | 4 | | | | |
| 60 | 2 | | | | |
| 623 | 4 | | | | |
| 61 | 2 | | | | |

EP 0 444 699 A2

# FIG. 8

EP 0 444 699 A2

| | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|
| X | 1118 R | 1119 R | | 650 R | 646 R | 642 R | 638 R | 634 R | 630 R | 626 R | 622 R | 618 R | 614 R | 610 R | 606 R | OPT | CLMP | AGC | V2 | X | X | X | CLMP | AGC | V1 | X | | | B Segment 4 |
| X | 1117 B | 1113 B | | 649 B | 645 B | 641 B | 637 B | 633 B | 629 B | 625 B | 621 B | 617 B | 613 B | 609 B | 605 B | OPT | CLMP | AGC | V2 | X | X | X | CLMP | AGC | V1 | X | | | A |
| 1120 R | 1116 R | 1112 R | | 648 R | 644 R | 640 R | 636 R | 632 R | 628 R | 624 R | 620 R | 616 R | 612 R | 608 R | 604 R | OPT | CLMP | AGC | V2 | X | X | X | CLMP | AGC | V1 | X | | | B Segment 3 |
| 1119 B | 1115 B | 1111 B | | 647 B | 643 B | 639 B | 635 B | 631 B | 627 B | 623 B | 619 B | 615 B | 611 B | 607 B | 603 B | OPT | CLMP | AGC | V2 | X | X | X | CLMP | AGC | V1 | X | | | A |
| X | 555 R | 551 R | | 83 R | 79 R | 75 R | 71 R | 67 R | 63 R | 59 R | 55 R | 51 R | 47 R | 43 R | | OPT | CLMP | GC | V2 | X | X | X | CLMP | AGC | V1 | X | | | B Segment 2 |
| X | 554 | 550 | | 82 B | 78 B | 74 B | 70 B | 66 B | 62 B | 58 B | 54 B | 50 B | 46 B | 42 B | | OPT | CLMP | AGC | V2 | X | X | X | CLMP | AGC | V1 | X | | | A |
| 557 R | 553 R | 549 R | | 81 R | 77 R | 73 R | 69 R | 65 R | 61 R | 57 R | 53 R | 49 R | 45 R | 41 R | | OPT | CLMP | AGC | V2 | X | X | X | CLMP | AGC | V1 | X | Guard | | B Segment 1 |
| 556 B | 552 B | 548 B | | 80 B | 76 B | 72 B | 68 B | 64 B | 60 B | 56 B | 52 B | 48 B | 44 B | 40 B | | OPT | | AGC | V2 | X | X | X | | AGC | V1 | X | Guard | Audio | A |

1H 1.5H — VIDEO 129H — Clamp — 11.5H 11H — Clamp — 2H 1.26 8.0° 2.0° 1.2° 1.2° 8.0° 2.0° 1.2°

143.5H (155.14°)

166.5H (180°)

Preamble

Postamble    Postamble

Guard   Audio   Guar   Audio

Margin   Preamble

23H (24.86°)

Beginning of track

# FIG. 9

| | | | | | | | | | | | |
|---|---|---|---|---|---|---|---|---|---|---|---|
| Bch | —<br>— | 1117<br>Pr | 1113<br>Pr | 1109<br>Pr | | | | 613<br>Pr | 609<br>Pr | 605<br>Pr | S4 |
| Ach | 1119<br>Pb | 1115<br>Pb | 1111<br>Pb | 1107<br>Pb | | | | 611<br>Pb | 607<br>Pb | 603<br>Pb | S4 |
| Bch | 1120<br>Pr | 1116<br>Pr | 1112<br>Pr | 1108<br>Pr | | | | 612<br>Pr | 608<br>Pr | 604<br>Pr | S3 |
| Ach | 1118<br>Pb | 1114<br>Pb | 1110<br>Pb | 1106<br>Pb | | | | 610<br>Pb | 606<br>Pb | 602<br>Pb | S3 |
| Bch | —<br>— | 556<br>Pr | 552<br>Pr | 548<br>Pr | | | 52<br>Pr | 48<br>Pr | 44<br>Pr | S2 | |
| Ach | —<br>— | 554<br>Pb | 550<br>Pb | 546<br>Pb | | | 50<br>Pb | 46<br>Pb | 42<br>Pb | S2 | |
| Bch | —<br>— | 555<br>Pr | 551<br>Pr | 547<br>Pr | | | 51<br>Pr | 47<br>Pr | 43<br>Pr | S1 | |
| Ach | 557<br>Pb | 553<br>Pb | 549<br>Pb | 545<br>Pb | | | 49<br>Pb | 45<br>Pb | 41<br>Pb | S1 | |

Tape running direction

Head scanning direction

EP 0 444 699 A2

# FIG. 10

**A — S1**

| | Pb | Y | Pb | Y | Pb | Y | | Pb | Y | Pb | Y | Pb | Y |
|---|---|---|---|---|---|---|---|---|---|---|---|---|---|
| T1 | 41 | 41 | 45 | 45 | 49 | 49 | | 549 | 549 | 553 | 553 | 557 | 557 |
| T2 | 42 | 43 | 46 | 47 | 50 | 51 | | 550 | 551 | 554 | 555 | — | —— |
| | Pr | Y | Pr | Y | Pr | Y | | Pr | Y | Pr | Y | Pr | Y |

**B — S2**

| | Pb | Y | Pb | Y | Pb | Y | | Pb | Y | Pb | Y | Pb | Y |
|---|---|---|---|---|---|---|---|---|---|---|---|---|---|
| T3 | 43 | 42 | 47 | 46 | 51 | 50 | | 551 | 550 | 555 | 554 | — | —— |
| T4 | 44 | 44 | 48 | 48 | 52 | 52 | | 552 | 552 | 556 | 556 | — | —— |
| | Pr | Y | Pr | Y | Pr | Y | | Pr | Y | Pr | Y | Pr | Y |

**C — S3**

| | Pb | Y | Pb | Y | Pb | Y | | Pb | Y | Pb | Y | Pb | Y |
|---|---|---|---|---|---|---|---|---|---|---|---|---|---|
| T5 | 602 | 602 | 606 | 606 | 610 | 610 | | 1110 | 1110 | 1114 | 1114 | 1118 | 1118 |
| T6 | 603 | 604 | 607 | 608 | 611 | 612 | | 1111 | 1112 | 1115 | 1116 | 1119 | 1120 |
| | Pr | Y | Pr | Y | Pr | Y | | Pr | Y | Pr | Y | Pr | Y |

**D — S4**

| | Pb | Y | Pb | Y | Pb | Y | | Pb | Y | Pb | Y | Pb | Y |
|---|---|---|---|---|---|---|---|---|---|---|---|---|---|
| T7 | 604 | 603 | 608 | 607 | 612 | 611 | | 1112 | 1111 | 1116 | 1115 | 1120 | 1119 |
| T8 | 605 | 605 | 609 | 609 | 613 | 613 | | 1113 | 1113 | 1117 | 1117 | — | —— |
| | Pr | Y | Pr | Y | Pr | Y | | Pr | Y | Pr | Y | Pr | Y |

EP 0 444 699 A2

# FIG. II

Head Locus in 2.5-Fold Speed Mode

N-th field    (N+1)th field    (N+2)th field    (N+3)th field    (N+4)th field

# FIG. 12

Head Locus in Double Speed Mode

# FIG. 13

Head Locus in Triple Speed Mode

FIG. 14

# FIG. 15

# FIG. 16

First field — Second field

A    Reproduction output signal

| 1 | 2 | 3 | 4 |

B    Normal speed reproduction

Write set/enable ①
②

Frame memory output signal

| 1/2 | 3/4 |

C    Variable speed reproduction

Write set/enable ①
②

Frame memory output signal

| 2/2 | 2/2 | 4/4 | 4/4 |

1/1        1/1        3/3        3/3

( Shading represents noise bar portion)

EP 0 444 699 A2

# FIG. 17

A             B

| |
|---|
| (N) , (N) |
| N + 1, N + 1 |
| (N) , (N) |
| N +2, N + 2 |

First field

| |
|---|
| (N+2),(N+2) |
| N + 4, N + 4 |
| (N+3),(N+3) |
| N ∔ 4, N + 4 |

Second field

# FIG. 18

A

Reproductio
signal on A channel

| Pb | 42 | Pb | 42 | Pb | 46 | Pb | 46 | Pb | 50 | Pb | 50 |

B

Reproduction
signal on B channel

| Pr | 44 | Pr | 44 | Pr | 48 | Pr | 48 | Pr | 52 | Pr | 52 |

C

Integrated output of reproduction
signal on A and B channel

| Pb | 42 | Pr | 42 | Pb | 44 | Pr | 44 | Pb | 46 | Pr | 46 | Pb | 48 | Pr | 48 | Pb | 50 | Pr |

# FIG. 19

A

Reproduction
signal on A channel

| Cn | 42 | Cn | 42 | Cw | 44 | Cw | 44 | Cn | 50 | Cn | 50 |

B

Reproduction
signal on B channel

| Cn | 43 | Cn | 43 | Cw | 45 | Cw | 45 | Cn | 51 | Cn | 51 |

C

Integrated output of reproduction
signal on A and B channel

| Cn | 42 | Cn | 43 | Cn | 42 | Cn | 43 | Cw | 44 | Cw | 45 | Cw | 44 | Cw | 45 | Cw | 50 | Cn |

EP 0 444 699 A2

FIG. 20

# FIG, 2 1

A

| | Cw | Y | CN | Y | Cw | Y | CN | Y | Cw | Y | CN | Y |
|---|----|---|----|---|----|---|----|---|----|---|----|---|
| TC1 | 40 | 40 | 41 | 41 | 42 | 42 | 43 | 43 | 44 | 44 | 45 | 45 |

B

| | Cw | Y | CN | Y | Cw | Y |
|---|----|---|----|---|----|---|
| Ch1 | 40 | 40 | 41 | 42 | 44 | 44 |

| | Cw | Y | CN | Y | Cw | Y |
|---|----|---|----|---|----|---|
| Ch2 | 42 | 41 | 43 | 43 | 46 | 45 |

# FIG. 22

A

| | Cw | Y | CN | Y | Cw | Y | Cw | Y | CN | Y | Cw | Y | CN | Y | Cw | Y |
|---|----|---|----|---|----|---|----|---|----|---|----|---|----|---|----|---|
| Ch1 | 40 | 40 | 45 | 46 | 48 | 48 | 52 | 52 | 57 | 58 | 60 | 60 | 65 | 66 | 68 | 68 |

B

| | Cw | Y | CN | Y | Cw | Y | Cw | Y | CN | Y | Cw | Y | CN | Y | Cw | Y |
|---|----|---|----|---|----|---|----|---|----|---|----|---|----|---|----|---|
| Ch2 | 42 | 41 | 47 | 47 | 50 | 49 | 54 | 53 | 59 | 59 | 62 | 61 | 67 | 67 | 70 | 69 |

TJ

29